# EUROPÄISCHE PATENTSCHRIFT

(11) **EP 3 631 592 B1**
(45) Veröffentlichungstag und Bekanntmachung des Hinweises auf die Patenterteilung: **27.07.2022**
(21) Anmeldenummer: 18722398.7
(22) Anmeldetag: 04.05.2018
(51) Int. Cl.: G05B 23/02, G01N 17/00

(54) **VERFAHREN UND SYSTEM ZUR ERMITTLUNG EINER VERBLEIBENDEN LEBENSDAUER EINES FLUIDDURCHSTRÖMTEN VERFAHRENSTECHNISCHEN APPARATS**
METHOD AND SYSTEM FOR DETERMINING AT LEAST ONE NON-DIRECTLY MEASURABLE QUANTITY OF A FLUID THRUST-CONDUCTING APPARATUS
PROCÉDÉ ET SYSTÊME DE DÉTERMINATION D'AU MOINS UNE GRANDEUR NON DIRECTEMENT MESURABLES D'UN DISPOSITIF TRAVERSÉ PAR UN FLUIDE

(30) Priorität: 23.05.2017 EP 17020223
(43) Veröffentlichungstag der Anmeldung: 08.04.2020
(73) Patentinhaber: Linde GmbH, 82049 Pullach (DE)
(72) Erfinder: KRÖNER, Andreas, 82515 Wolfratshausen (DE); POTTMANN, Martin, 82515 Wolfratshausen (DE); SLABY, Oliver, 81547 München (DE)
(74) Vertreter: Meilinger, Claudia Sabine
(86) Internationale Anmeldenummer: PCT/EP2018/025135
(87) Internationale Veröffentlichungsnummer: WO 2018/215095

(56) Entgegenhaltungen:
- EP-A2- 2 887 168
- WO-A1-95/16890
- DE-A1-102009 042 994
- US-A1- 2015 094 988

## Beschreibung

Die Erfindung betrifft ein Verfahren und ein System zur Ermittlung einer verbleibenden Lebensdauer eines als Wärmetauscher oder als Kolonne oder als Behälter zur Phasentrennung ausgebildeten fluiddurchströmten verfahrenstechnischen Apparats und eine Anordnung aus einem solchen fluiddurchströmten verfahrenstechnischen Apparat und einem solchen System.

### Stand der Technik

Es wird angestrebt, Anlagen oder zumindest Komponenten davon, insbesondere Apparate, durch Erfassen und Auswerten geeigneter Größen, wie z.B. Schwingungen, zu überwachen (sog. Condition Monitoring), um vorzugsweise Störungen, Fehler, Ausfälle usw. möglichst früh erkennen zu können. Dazu werden die zu überwachenden Anlagenkomponenten mit geeigneten Sensoren ausgestattet, um die geeigneten Größen zu messen und der Auswertung zuzuführen. Insbesondere auftretende Schwingungen können mit dem Anlagenzustand in Beziehung gesetzt werden, um z.B. eine Ausfallwahrscheinlichkeit oder verbleibende Lebensdauer von Komponenten zu bestimmen.

Problematisch ist jedoch die Überwachung von Komponenten, deren Zustand nicht unter Verwendung von Schall- oder Schwingungsmessungen abgeschätzt werden kann, wie z.B. bei fluiddurchströmten verfahrenstechnischen Apparaten, wie zum Beispiel Wärmetauschern oder Kolonnen oder Behältern zur Phasentrennung. Auch deren Material (Metall) unterliegt einer Materialermüdung, jedoch nicht aufgrund von Vibrationen, sondern aufgrund von Spannungsschwankungen.

Zwar kann man Spannungsniveaus im Material mittels einer Finite-Elemente-Methode berechnen, was jedoch aufgrund der Komplexität und des Zeitbedarfs der Berechnung nicht in Echtzeit, sondern nur off-line erfolgen kann. Für eine regelmäßige Überwachung und Lebensdauerbestimmung eignen sich solche Verfahren kaum.

Beispielsweise beschreibt die WO 95/16890 A1 ein Überwachungssystem, um direkt Leistungsverluste eines Wärmetauschers aufgrund von Verschmutzungen erkennen zu können, wobei ein Unterschied zwischen einem ersten und zweiten Satz von Temperaturwerten und ferner ein Unterschied zwischen einem ersten und zweiten Satz von Geschwindigkeiten eines Kühlmittelflusses gemessen werden. Mittels eines Datenerfassungssystems werden diese Unterschiede ausgewertet und Leistungsverluste des Wärmetauschers werden an einem Display angezeigt.

Die US 2015/0094988 A1 zeigt eine Sensorarchitektur für eine Prozessanlage mit Sensoren zum Erfassen von Messwerten und einer Logikeinheit zum Auswerten der Sensormesswerte und zum Bestimmen von Größen, welche unmöglich, schwierig oder nur sehr teuer direkt gemessen werden können. Zu diesem Zweck wertet die Logikeinheit mittels eines empirischen datenbasieren Modells Sensorwerte aus.

Die EP 2 887 168 A2 beschreibt die Überwachung und Steuerung von Maschinen mit Energieerzeugungseinheiten wie Gas-, Dampf-, Windturbinen oder ähnliche Vorrichtungen, um elektrische Energie zu erzeugen. Dabei werden Sensordaten von Sensoren empfangen. Weiterhin werden externe Daten beispielsweise eine Historie der Maschine betreffend empfangen. Die Sensordaten und die externen Daten werden analysiert und es wird beispielsweise eine Lebensdauer bestimmt.

Die DE 10 2009 042994 A1 offenbart ein Verfahren zur sicherheitstechnischen Überwachung des Betriebs eines Wärmetauschers zur Erhöhung seines Lebensdauer. Es ist wünschenswert, Kenngrößen von Apparaten wie Wärmetauschern, Kolonnen oder Behältern zur Phasentrennung, die einen Rückschluss auf die Lebensdauer zulassen, möglichst genau ermitteln zu können.

### Offenbarung der Erfindung

Vor diesem Hintergrund schlägt die vorliegende Erfindung ein Verfahren zur Ermittlung einer verbleibenden Lebensdauer eines als Wärmetauscher oder als Kolonne oder als Behälter zur Phasentrennung ausgebildeten fluiddurchströmten verfahrenstechnischen Apparats und ein System aus Sensoren und solchen Recheneinheiten zu dessen Durchführung sowie eine Anordnung aus einem solchen System und einem verfahrenstechnischen Apparat mit den Merkmalen der unabhängigen Patentansprüche vor. Vorteilhafte Ausgestaltungen sind jeweils Gegenstand der abhängigen Patentansprüche sowie der nachfolgenden Beschreibung.

Der Apparat kann zweckmäßigerweise als eine Komponente einer verfahrenstechnischen Anlage ausgebildet und mit weiteren Anlagenkomponenten verbunden sein, beispielsweise mit weiteren Wärmetauschern, Kolonnen oder Behältern zur Phasentrennung.

Die Erfindung bedient sich der Maßnahme, mechanische Spannungen als eine nicht direkt messbare Kenngröße eines fluiddurchströmten verfahrenstechnischen Apparats, der als Wärmetauscher oder als Phasentrennapparat (Behälter mit Einbauten) oder als Kolonne (hohle, schlanke Säule mit Einbauten) ausgebildet ist, basierend auf Messwerten einer Temperatur, die von mehreren in oder an dem fluiddurchströmten verfahrenstechnischen Apparat angeordneten Sensoren stammen, ermitteln. Aus der mechanischen Spannung wird die verbleibende Lebensdauer als eine weitere nicht direkt messbare Kenngröße ermittelt. Als nicht direkt messbare Kenngröße sei in diesem Zusammenhang insbesondere eine den Apparat charakterisierende Größe zu verstehen, welche nicht unmittelbar mit Hilfe der vorhandenen Sensoren messtechnisch erfassbar ist.

Erfindungsgemäß werden also herrschende mechanische Spannungen, insbesondere in Form von Spannungsniveaus bzw. Spannungsverläufen, aus Temperaturmesswerten bestimmt, und daraus wird die verbleibende Lebensdauer als weitere nicht direkt messbare Kenngröße ermittelt. Dazu werden in einem ersten Schritt basierend auf den Temperaturmesswerten, z.B. mittels der Anwendung von Ersatzmodellen (surrogate modelling) oder Maschinenlernen (machine learning), im Material des verfahrenstechnischen Apparats herrschende mechanische Spannungen, insbesondere in Form von Spannungsniveaus bzw. Spannungsverläufen, berechnet.

Es hat sich nämlich gezeigt, dass die Lebensdauer eines fluiddurchströmten verfahrenstechnischen Apparats maßgeblich von der Anzahl von Spannungsveränderungen einer gewissen Größe bestimmt wird. Solche Spannungsveränderungen treten typischerweise beim Hochfahren des Apparats, beim Wechsel zwischen unterschiedlichen Betriebsszenarios oder in Folge von Prozessstörungen, die zum Beispiel durch Maschinen- oder Ventilfehler verursacht sind, auf. Im Allgemeinen hängt die verbrauchte Lebenszeit stark davon ab, wie der Prozess betrieben wird, wobei jedoch das Betriebspersonal üblicherweise keine klaren Anzeichen für den Einfluss des Betriebs auf die Spannungsniveaus, die im Material des Apparats auftreten, und in der Folge auf die erwartete Lebensdauer, hat.

Die Erfindung macht es möglich, mechanische Spannungen im Material (üblicherweise Metall) von fluiddurchströmten verfahrenstechnischen Apparaten in Echtzeit zu bestimmen und daraus die verbleibende Lebensdauer sowie gewünschtenfalls andere nicht direkt messbare Kenngrößen abzuschätzen. Dies kann vorzugsweise für eine Zustandsüberwachung ("condition monitoring") und/oder eine vorausschauende Wartung ("predictive maintenance") des Apparats verwendet werden. Dies kann vorzugsweise auch für eine vorausschauende Steuerung ("advanced control") des Apparats verwendet werden, wobei der Apparat beispielsweise so betrieben wird, dass eine gewünschte Lebensdauer verbleibt. Wenn beispielsweise erkannt wird, dass die verbleibende Lebensdauer zu gering ist, beispielsweise einen Schwellwert unterschreitet, kann der Apparat zukünftig so betrieben werden, dass weniger Spannungswechsel auftreten und so die verbleibende Lebensdauer nicht weiter sinkt oder gar wieder ansteigt.

An dem Apparat ist eine Recheneinheit angebracht, die datenübertragend an eine entfernte Recheneinheit (z.B. Server oder sog. "Cloud") gekoppelt ist. Erfindungsgemäß wird die mechanische Spannung mittels der Recheneinheit ermittelt, die mechanische Spannung und/oder die Messwerte der Temperatur werden an die entfernte Recheneinheit übertragen und dort wird die verbleibende Lebensdauer ermittelt. Alternativ werden erfindungsgemäß die Messwerte der Temperatur an die entfernte Recheneinheit übertragen und dort werden die mechanische Spannung und die verbleibende Lebensdauer ermittelt.

Somit werden im Rahmen der vorliegenden Erfindung die ermittelte Kenngröße, also die ermittelte mechanische Spannung, und/oder die Messwerte der Temperatur an die entfernte Recheneinheit übertragen und dort die verbleibende Lebensdauer als wenigstens eine weitere nicht direkt messbare Kenngröße ermittelt. Hierdurch können insbesondere Kenngrößen auf Grundlage der Daten von mehreren Apparaten ermittelt werden und/oder Kenngrößen, deren Ermittlung die Rechen- und/oder Speicherkapazität der eingesetzten lokalen Recheneinheiten übersteigt.

Als entfernte Recheneinheit sei in diesem Zusammenhang insbesondere eine Recheneinheit zu verstehen, welche nicht an dem Apparat angebracht ist und sich in einer sehr großen Entfernung zu diesem befinden kann und sich dabei nicht notwendigerweise im selben Gebäude befinden muss. Die an dem Apparat angebrachte Recheneinheit steht dabei zweckmäßigerweise mit der entfernten Recheneinheit über ein Netzwerk in Kommunikationsverbindung, insbesondere über das Internet. Insbesondere ist die entfernte Recheneinheit als ein Server ausgebildet, zweckmäßigerweise als Teil eines entfernten, verteilten Recheneinheitssystems im Sinne des Cloud-Computing (deutsch etwa: Rechnen in der Wolke). Mittels des Cloud-Computing können IT-Infrastrukturen, wie z. B. Datenspeicher, dynamisch an den Bedarf angepasst und über ein Netzwerk zur Verfügung gestellt werden. Insbesondere kann die an dem Apparat angebrachte Recheneinheit daher klein gebaut werden und die aufwendigeren Rechenoperationen können an die entfernte Recheneinheit, also an die Cloud ausgelagert werden.

Insbesondere kann der Apparat somit im Zuge der sog. "Industrie 4.0" vernetzt werden. Darunter ist die Vernetzung von Maschinen- bzw. Anlagenequipment und insbesondere auch deren Anbindung an das Internet bzw. das Internet der Dinge (sog. loT, "Internet of Things") zu verstehen. Derartig vernetzte loT-Geräte können beispielsweise Recheneinheiten, Steuerung bzw. Steuergerät, Sensoren, Aktoren oder andere Maschinenkomponenten einer Maschine sein, welches über ein Netzwerk, insbesondere das Internet, miteinander vernetzt sind.

Somit wird vorzugsweise bereits der Apparat mit Sensoren und der Recheneinheit (als Teil des erfindungsgemäßen Systems) und somit in gewisser Weise mit eigener "Intelligenz" unabhängig von der Anlagensteuerung ausgerüstet. Die ermittelte mechanische Spannung als nicht direkt messbare Kenngröße kann dann insbesondere in der verfahrenstechnischen Anlage und/oder extern (z.B. bei einem Wartungsunternehmen) weiterverwendet bzw. weiterverarbeitet werden. Sie kann beispielsweise für eine Zustandsüberwachung ("condition monitoring") und/oder Wartung ("predicitve maintenance") und/oder Steuerung ("advanced control") herangezogen werden.

Vorteilhafterweise können die ermittelte Lebendsauer und/oder andere von der externen Recheneinheit ermittelte nicht direkt messbare Kenngrößen von der externen Recheneinheit an die Recheneinheit übermittelt werden. Die oder diese Kenngrößen können in der Recheneinheit an dem Apparat hinterlegt und z.B. für eine Zustandsüberwachung oder vorausschauende Wartung oder andere Zwecke weiterverwendet werden, beispielsweise für den Anlagenbetrieb bzw. die Anlagensteuerung.

Vorzugsweise wird die mechanische Spannung als Kenngröße (im Wesentlichen) in Echtzeit ermittelt, so dass sie ad hoc für weitere Zwecke zur Verfügung steht, insbesondere für die Ermittlung der Lebensdauer. Dazu können insbesondere physikalische oder datengetriebene Ersatzmodelle oder durch Maschinenlernalgorithmen trainierte Ersatzmodelle verwendet werden. Somit wirkt die Erfindung in gewisser Weise wie ein "Smart Sensor", der die interessierende Kenngröße "misst". Zweckmäßigerweise können noch weitere Kenngrößen bestimmt werden, beispielsweise eine verbrauchte Lebensdauer, eine innere Verschmutzung (Fouling) und eine Fehlverteilung eines Prozessflusses oder von Prozessflüssen (beispielsweise eine ungleichmäßige Verteilung eines Prozessstromes auf die einzelnen Passagen eines Plattenwärmetauschers, die eine Minderung der Wärmeübertragungskapazität zur Folge hat, oder die ungleichmäßige Verteilung von Gas- und Flüssigkeitsstrom über den Querschnitt in einer Kolonne, die zu einer verminderte Stoffaustauschleistung führt).

Für eine Kenngrößenermittlung in Echtzeit müssen hinreichend viele Messwerte idealerweise von unterschiedlichen Stellen verfügbar sein. Herkömmlicherweise sind jedoch die verfahrenstechnischen Apparate nicht oder zumindest nicht im benötigten Umfang mit Sensoren ausgerüstet. Vorzugsweise wird daher der verfahrenstechnische Apparat bereits während des Designs entsprechend geplant und während der Herstellung mit ausreichend vielen Sensoren ausgerüstet, welche eine spätere Kenngrößenermittlung in Echtzeit erlauben. Diese Sensoren sind ein integraler Bestandteil einer bevorzugten Ausführungsform eines erfindungsgemäßen verfahrenstechnischen Apparats und sind auf der Oberfläche oder im Material des verfahrenstechnischen Apparats positioniert.

Neben dem Vorhandensein entsprechender Sensoren ist die Messung und Signalverarbeitung ein weiterer wichtiger Aspekt bei der Kenngrößenermittlung. Hierfür können ein oder mehrere geeignete Recheneinheiten wie insbesondere sogenannte Einplatinencomputer (engl. single-board computer (SBC)), wie ein Rasperry Pi oder Arduino, verwendet werden. Ein Einplatinencomputer ist ein Computersystem, bei dem sämtliche zum Betrieb nötigen elektronischen Komponenten auf einer einzigen Leiterplatte zusammengefasst sind. Aufgrund der Rechenleistung und des vorhandenen Betriebssystems verfügen sie über die Möglichkeit, die Sensordaten flexibel zu erfassen und zu verarbeiten (gegebenenfalls mittels Signalverarbeitungsmethoden, wie z.B. Ausreißerbestimmung, Glättung und Filterung). Sie sind robust und zuverlässig und bauen klein. Damit decken sie wichtige Anforderungen für den Einsatz im industriellen Feld gut ab. Überdies sind Einplatinencomputer meist sehr kostengünstig. Weiterhin verfügen sie über ausreichend viele Anschlüsse, insbesondere sogenannte Allzweck-Eingabe/Ausgabe-Anschlüsse (GPIO, general purpose input/output). Wegen der Verfügbarkeit von WiFi, LAN, Bluetooth und anderer Telekommunikationstechnologien, wie zum Beispiel LTE, können die Daten besonders leicht an die entfernte Recheneinheit (Server oder sog. "Cloud") fernübertragen werden. Sollte eine Netzwerkverbindung für die Übertragung gerade nicht verfügbar sein oder sollen die Daten nur auf Aufforderung gesendet werden, wird zweckmäßigerweise der Onboard-Speicher verwendet, um die Daten zwischenzuspeichern.

Eine Verbindung der Recheneinheit(en) mit dem Prozessleitsystem (PLS, engl. Distributed Control System, DCS oder Process Control System, PCS), welches zum Führen der verfahrenstechnischen Anlage dient, ist nicht zwingend notwendig, da die Recheneinheiten oder die entfernte Recheneinheit zur Kenngrößenermittlung bzw. zur Ermittlung der verbleibenden Lebensdauer eingesetzt werden, was mit dem eigentlichen Anlagenbetrieb üblicherweise nichts zu tun hat. Eine deshalb mögliche Netzwerktrennung kommt Sicherheitsaspekten zugute. Jedoch kann vorteilhaft vorgesehen sein, dass auch nicht mittels der Sensoren gemessene Messwerte (auch als externe Messwerte bezeichnet), insbesondere Einlass- und Auslasstemperaturen und/oder Umgebungsmesswerte (Umgebungstemperatur, Luftdruck, Luftfeuchte usw.), neben den Messwerten in die Kenngrößenermittlung eingehen. Insbesondere die Umgebungsmesswerte können auch von Dritten, wie z.B. Wetterdiensten usw., stammen.

Vorzugsweise werden in der Recheneinheit und/oder der entfernten Recheneinheit auch virtuelle Messwerte einer Zielgröße aus den (gemessenen und/oder externen) Messwerten bestimmt. Insbesondere für den Fall, dass die Messwerte der speziell dafür vorgesehen Sensoren und die genannten externen Messwerte nicht für eine qualitativ ausreichende Kenngrößenermittlung ausreichen, werden vorzugsweise sog. virtuelle Sensoren bzw. Softsensoren durch die Recheneinheit bereitgestellt. Diese basieren auf einer Abhängigkeit der Zielgröße von stellvertretenden Messgrößen. Somit wird die Zielgröße nicht direkt gemessen, sondern anhand zu ihr korrelierender Messgrößen und eines Modells der Korrelation bzw. Abhängigkeit berechnet. Die Ermittlung der Abhängigkeit kann dabei auf unterschiedliche Weise stattfinden, beispielsweise mit Hilfe von Modellen, künstlichen neuronalen Netzen oder multivariater Verfahren. Vorzugsweise basieren die Softsensoren auf Ab-Initio-Modellen, empirischen Modellen oder datengestützten Modellen des Apparats und/oder benachbarter Anlagenteile.

Insgesamt kann das System aus Sensoren und wenigstens einer am Apparat angebrachten Recheneinheit und einer damit datenübertragend gekoppelten entfernten Recheneinheit vorteilhaft dazu verwendet werden, Sensordaten zu erfassen, diese bei Bedarf zu filtern, bei Bedarf weitere Ausgaben, wie z.B. fehlende oder nicht direkt verfügbare Messwerte (interne Temperaturen, Phasenzustände), zu berechnen und um Kenngrößen zu ermitteln. Vorzugsweise werden die resultierenden Daten in der entfernten Recheneinheit gespeichert und/oder von der entfernten Recheneinheit an die Recheneinheit übermittelt. Insbesondere die Verwendung von Einplatinencomputern mit Cloud-Technologie ist eine sehr flexible, kostengünstige Lösung zur Sensordatenerfassung und zum Bereitstellen von Softsensordaten.

Vorzugsweise ist der Wärmetauscher als ein Platten- oder Spiral- oder gewickelter Wärmetauscher, insbesondere als Zwei- oder Mehrstromwärmetauscher ausgebildet. Die Kolonne ist vorzugsweise eine Boden-zu-Boden-Kolonne oder eine Packungskolonne oder eine Füllkörperkolonne für Rektifikation, Absorption oder physikalische Wäsche.

Wärmetauscher sind in zahlreichen Ausführungsformen bekannt. Grundsätzlich sind Wärmetauscher dazu ausgelegt, einen Wärmeaustausch zwischen hindurchströmenden Fluiden (Gasen oder Flüssigkeiten) zu ermöglichen. Die Fluide bleiben dabei räumlich getrennt, so dass keine Vermischung zwischen diesen auftritt. Die von den Fluiden ausgetauschten Wärmemengen strömen also durch die die Fluide trennenden Strukturen des Wärmetauschers. Ein Plattenwärmetauscher weist eine Mehrzahl Kammern bzw. Passagen auf, die durch Platten gebildet werden und durch die die Fluide strömen können. Eine Passage kann Wärmeaustauschprofile, sog. Fins, durch die bzw. entlang denen das jeweilige Fluid strömt, aufweisen. Insbesondere Plattenwärmetauscher unterliegen aufgrund ihres speziellen Aufbaus mit vielen Kammern, die von Fluid mit unterschiedlicher Temperatur durchströmt werden, einer starken spannungsverursachten Materialermüdung, weshalb sich die Erfindung dafür besonders gut eignet.

Aufgrund der Flexibilität von Einplatinencomputern und der verfügbaren Betriebssysteme, aufgrund der Cloud-Konnektivität und der verfügbaren GPIO-Anschlüsse, kann ein System aus Sensor(en) und Einplatinencomputer für alle Arten von Anlagenkomponenten, an denen Sensoren installiert sind, und für alle Arten von Messwerten verwendet werden. Insbesondere in Umgebungen, in denen der Anlagenhersteller/-warter keinen direkten Zugriff auf die Anlagenmesswerte des Betreibers hat, kann dieser Prozess verwendet werden, um Daten zu erzeugen und zu sammeln, die für eine erwünschte weitere Analyse notwendig sind.

Eine mit diesem Ansatz realisierbare Methode ist z.B. die Leistungsüberwachung von Spiral- bzw. gewickelten Wärmetauschern. Für diesen Typ von Wärmetauschern kann eine dreidimensionale Temperaturverteilung mittels faseroptischer Messungen erhalten werden. Die Datensammlung kann dann mittels hier beschriebener Methoden durchgeführt werden, wobei die Datenanalyse vorzugsweise auf thermische Gradienten, die in unterschiedlichen Abschnitten beobachtet werden, und potentielle Fehlverteilungen eines Prozessflusses oder von Prozessflüssen gerichtet wird. Neben Temperatur-, Druck- und Durchflusssensoren sind auch akustische Sensoren für die Überwachung von Vibrationen im gewickelten Wärmetauscher nützlich. Aus all diesen Informationen können Anzeichen über die Intaktheit von Leitungen und deren Aufhängungen abgeleitet werden.

Eine weitere vorteilhafte Einsatzmöglichkeit solcher Systeme ist die Überwachung von Tanks, bei denen automatisch Bestellungen erzeugt werden sollen, wenn der Füllstand unter eine gewisse Schwelle sinkt. Hier kann der Füllstand kontinuierlich mittels geeigneter Sensoren überwacht werden und bei der Auswertung können insbesondere Vorhersagemodelle verwendet werden, um den idealen Nachbestellzeitpunkt und/oder die Nachbestellmenge möglichst gut abschätzen zu können.

Eine weitere vorteilhafte Einsatzmöglichkeit solcher Systeme ist die Überwachung der Güte der Trennung von Gas- und Flüssigphase in einem Phasentrennapparat oder in einer Kolonne. Vorzugsweise können neben Oberflächen- und Innen-Stromtemperaturen ferner vorzugsweise Durchflussmengen und Druckverluste als Messwerte gewonnen werden. Aus diesen Messwerten kann neben mechanischen Spannungen und der verbleibenden Lebendsauer als nicht direkt messbare Kenngröße vorzugsweise ein Trenngrad von Gas- und Flüssigphase ermittelt werden. Durch die Messung optischer Eigenschaften der Gasphase kann ferner zweckmäßigerweise die Restmenge von Flüssigkeit in der Gasphase ermittelt werden. Anhand des so bestimmten Flüssigkeitsanteils können durch geeignete Prozessführung nachfolgende flüssigkeitssensible Apparate, beispielsweise Verdichter, vor Flüssigkeit geschützt werden.

Eine weitere vorteilhafte Einsatzmöglichkeit solcher Systeme ist die prädiktive Wartung für Großanlagen, wie z.B. Dampfspalter (steam cracker) oder Reformer. Durch Einsatz einer Vielzahl der genannten Systeme können zahlreiche reale und virtuelle Sensordaten in einem Rechenzentrum bzw. einer Cloud gesammelt und ausgewertet werden. Auf Grundlage der Auswertung kann dann ein Wartungsbedarf (z.B. Entkoken, Reparieren, Austauschen) abgeschätzt werden. Gleichzeitig ermöglicht die Datensammlung und Auswertung möglicherweise auch das Erkennen von Schwachstellen und die Verbesserung künftiger Anlagen.

Im Rahmen der Erfindung wird eine flexible Methode zum Implementieren von Sensoren in verfahrenstechnischen Apparaten und zum Zugreifen auf die Sensordaten für eine Kenngrößenermittlung der verbleibenden Lebensdauer in Echtzeit (online) vorgestellt. Zusätzlich schlägt die Erfindung sogenannte Softsensoren in Einplatinencomputern vor, die Schätzwerte für Sensorgrößen, die nicht direkt zugänglich sind, auf Grundlage von Prozessvariablen unter Verwendung von Ab-Initio-Simulationen oder Optimierungen erzeugen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

Figur 1 zeigt schematisch und perspektivisch einen Plattenwärmetauscher von außen mit einigen Anbauten.
Figur 2 zeigt schematisch in einem Flussdiagramm ein Verfahren gemäß einer Ausführungsform der Erfindung.
Figur 3 zeigt schematisch in einem Blockdiagramm ein Verfahren gemäß einer Ausführungsform der Erfindung.

### Ausführliche Beschreibung der Zeichnungen

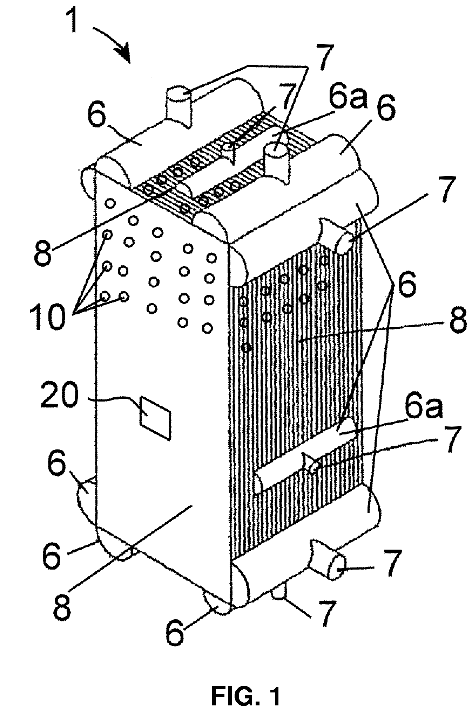

Figur 1 zeigt einen hier als Plattenwärmetauscher 1 ausgebildeten verfahrenstechnischen Apparat von außen. Der Plattenwärmetauscher weist einen quaderförmigen Zentralkörper 8 mit einer Länge von beispielsweise mehreren Metern und einer Breite bzw. Höhe von beispielsweise etwa einem bzw. wenigen Metern auf. Oben auf dem Zentralkörper 8, an dessen Seiten und unterhalb des Zentralkörpers 8 erkennt man Aufsätze 6 und 6a. Die unterhalb des Zentralkörpers 8 und auf der der abgebildeten Seite abgewandten Seite befindlichen Aufsätze 6 und 6a sind teilweise verdeckt.

Durch Stutzen 7 kann dem Plattenwärmetauscher ein Fluid bzw. Prozessstrom zugeführt bzw. diesem wieder entnommen werden. Die Aufsätze 6 und 6a dienen zur Verteilung des durch die Stutzen 7 eingebrachten Fluids bzw. zum Sammeln und zur Konzentration des aus dem Plattenwärmetauscher zu entnehmenden Fluids. Innerhalb des Plattenwärmetauschers tauschen dann die verschiedenen Fluidströme Wärmeenergie aus.

Der in Figur 1 gezeigte Plattenwärmetauscher ist dazu ausgelegt, Fluidströme in getrennten Passagen zum Wärmeaustausch aneinander vorbeizuführen. Ein Teil der Ströme kann gegensinnig aneinander vorbeigeführt werden, ein anderer Teil über Kreuz oder gleichsinnig.

Im Wesentlichen handelt es sich bei dem Zentralkörper 8 um eine Anordnung aus Trennblechen, Wärmeaustauschprofilen (sogenannte Fins) und Verteilerprofilen. Trennbleche und Profile aufweisende Schichten wechseln sich ab. Eine ein Wärmeaustauschprofil und Verteilerprofile aufweisende Schicht wird Passage genannt.

Der Zentralkörper 8 weist also abwechselnd parallel zu den Strömungsrichtungen liegende Passagen und Trennbleche auf. Sowohl die Trennbleche als auch die Passagen sind meist aus Aluminium gefertigt. Zu ihren Seiten sind die Passagen durch Balken aus Aluminium abgeschlossen, so dass durch die Stapelbauweise mit den Trennblechen eine Seitenwand ausgebildet ist. Die außenliegenden Passagen des Zentralkörpers sind durch eine parallel zu den Passagen und den Trennblechen liegende Abdeckung aus Aluminium verdeckt.

Ein solcher Zentralkörper 8 kann hergestellt werden z.B. durch Aufbringen eines Lots auf die Flächen der Trennbleche und anschließendes abwechselndes Aufeinanderstapeln der Trennbleche und der Passagen. Die Abdeckungen decken den Zentralkörper 8 nach oben oder unten ab. Anschließend ist der Zentralkörper durch Erhitzen in einem Ofen verlötet worden.

An den Seiten des Plattenwärmetauschers weisen die Verteilerprofile Verteilerprofilzugänge auf. Durch diese kann von außen das Fluid in die zugehörigen Passagen über die Aufsätze 6 und 6a und Stutzen 7 eingebracht bzw. auch wieder entnommen werden. Die Verteilerprofilzugänge werden durch die Aufsätze 6 bzw. 6a verdeckt.

Aus der EP 1 798 508 A1 ist bekannt, durch Simulation der auf Wärmeströmungen basierenden Temperaturverteilung in dem Plattenwärmetauscher die Spannungsverteilung zu bestimmen. Basierend auf diesen simulierten Spannungsverteilungen lassen sich Ausfallrisiken abschätzen. Um die Spannungsverteilung in einem Plattenwärmetauscher zu bestimmen, wird dort zunächst die räumliche Temperaturverteilung anhand eines Schichtmodells bestimmt und aus dieser die Spannungsverteilung.

Im Rahmen einer Ausführungsform der Erfindung wird nun vorgeschlagen, den Plattenwärmetauscher mit ausreichend vielen, hier als Temperatursensoren 10 ausgebildeten Sensoren auszustatten und auf Grundlage der Sensordaten in einem ersten Schritt die Spannungsverteilung als interessierende nicht direkt messbare Kenngröße zu bestimmen. Die Temperatursensoren 10 sind datenübertragend mit einer Recheneinheit 20 gekoppelt, die vorzugsweise ebenfalls am Plattenwärmetauscher angeordnet ist. Wenngleich in der Figur die Temperatursensoren 10 untereinander relative große Abstände aufweisen, werden diese in der Praxis vorteilhaft eng verteilt, um die Temperaturverteilung in ausreichender Auflösung messen zu können.

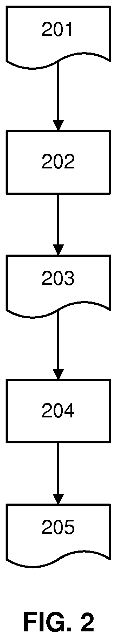

Gemäß der hier dargestellten bevorzugten Ausführungsform der Erfindung ist die Recheneinheit 20 als Einplatinencomputer ausgebildet und zur Durchführung eines erfindungsgemäßen Verfahrens, wie schematisch in Figur 2 gezeigt, eingerichtet.

In einem Schritt 201 wird mittels der Temperatursensoren 10 eine Anzahl von Temperaturmesswerten als Messwerte erfasst und der Recheneinheit 20 zugeführt.

In einem Schritt 202 werden die Temperaturmesswerte ausgewertet, insbesondere unter Verwendung von Modellen, um im Material herrschende Spannungen zu bestimmen (203). Diese Spannungen werden insbesondere orts- und zeitaufgelöst bestimmt, so dass insbesondere orts- und zeitabhängige Spannungsverläufe bestimmt werden können. Die Spannungen bzw. Spannungsverläufe stellen eine nicht direkt messbare Kenngröße dar.

Diese werden einer Lebensdauerabschätzung 204 zugeführt, wobei eine verbleibende Lebensdauer als weitere nicht direkt messbare Kenngröße bestimmen wird (205). Die Bestimmung bedient sich insbesondere der Ermittlung von Spannungsschwankungen und deren Vergleich mit einem oder mehreren vorgegebenen Schwellwerten. Je stärker die Spannung lokal schwankt, desto stärker wird das Material beansprucht und desto kürzer ist die verbleibende Lebensdauer. Eine starke Schwankung umfasst dabei sowohl eine große absolute Änderung als auch eine schnelle relative Änderung, d.h. mit großem Gradienten.

Die einzelnen Schritte finden insbesondere (quasi-)kontinuierlich statt, um eine kontinuierliche Überwachung des Apparats 1 zu ermöglichen.

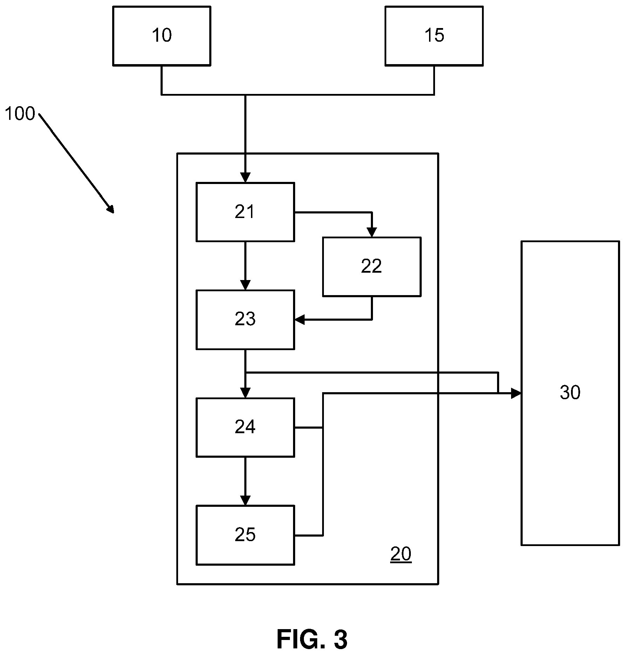

Figur 3 zeigt schematisch in einem Blockdiagramm ein erfindungsgemäßes System 100 gemäß einer bevorzugten Ausführungsform der Erfindung. Das System 100 weist, wie erläutert, mehrere insbesondere als Temperatursensoren ausgebildete Sensoren 10, eine mit diesen datenübertragend gekoppelte vorzugsweise als Einplatinencomputer ausgebildete Recheneinheit 20 und an eine mit der Recheneinheit 20 datenübertragend gekoppelte entfernte Recheneinheit 30 ("Cloud") auf.

Der Recheneinheit 20 werden vorzugsweise noch weitere Daten 15, wie zum Beispiel Daten des Prozessleitsystems und/oder historische Daten und/oder Umgebungsdaten zugeführt. Diese können als externe Messwerte verstanden werden.

Insgesamt stehen somit in der Recheneinheit 20 zahlreiche (interne und externe) Messwerte sowohl aus dem Prozess als auch der Umgebung zur Verfügung (21). Neben den Temperaturmesswerten können dies insbesondere Durchflussmesswerte, Druckmesswerte und andere Temperaturmesswerte, wie Einlass- und Auslasstemperaturen, Zusammensetzung und Flüssigkeits- oder Gasanteil des Fluids (bei 7) oder Umgebungstemperaturen sein.

Gemäß einer bevorzugten Ausführungsform der Erfindung können in der Recheneinheit 20 auch ein oder mehrere sogenannte Softsensoren 22 implementiert sein, die aus den zur Verfügung stehenden Messwerten 21 ein oder mehrere virtuelle Messwerte von Zielgrößen, die einer Messung nicht ohne weiteres zugänglich sind, berechnen.

Die realen (internen und/oder externen) Messwerte 21 und virtuellen Messwerte 22 werden einer Auswertung 23 zugeführt, welche in einem ersten Schritt insbesondere in dem überwachten Apparat 1 herrschende Temperaturverläufe ermittelt.

Alternativ oder zusätzlich können die Temperaturmesswerte und/oder Temperaturverläufe an die entfernte Recheneinheit 30 übertragen werden.

Gemäß einer bevorzugten Ausführungsform der Erfindung werden in der Recheneinheit 20 in einem Schritt 24 aus den Temperaturverläufen Spannungsverläufe als nicht direkt messbare Kenngrößen ermittelt, wobei die Berechnung insbesondere auf Modellen, wie zum Beispiel datengestützten Metamodellen, zusammen mit einem Schätzalgorithmus (Filter oder Beobachter) basieren kann. Die Spannungsverläufe bzw. Spannungswerte werden in einem Schritt 25 an die entfernte Recheneinheit 30 zur Speicherung und/oder Weiterverarbeitung übertragen.

Alternativ können die Spannungsverläufe aus den Temperaturverläufen auch in der entfernten Recheneinheit 30 ermittelt werden.

In der entfernten Recheneinheit 30 wird aus den Spannungsverläufen eine verbleibende Lebensdauer des Apparats 1 als nicht direkt messbare Kenngröße abgeschätzt. Das Ergebnis kann in der entfernten Recheneinheit 30 gespeichert und/oder weiterverarbeitet werden. Alternativ oder zusätzlich kann das Ergebnis auch von der entfernten Recheneinheit 30 an die Recheneinheit 20 zur Speicherung und/oder Weiterverarbeitung übertragen werden.

Es ist auch denkbar, dass die verbleibende Lebensdauer des Apparats 1 als nicht direkt messbare Kenngröße in der Recheneinheit 20 aus den Spannungswerten bzw. Spannungsverläufen abgeschätzt wird.

Die verbleibende Lebensdauer und/oder jede weitere nicht direkt messbare Kenngröße können insbesondere in der verfahrenstechnischen Anlage und/oder extern (z.B. bei einem Wartungsunternehmen) weiterverwendet bzw. weiterverarbeitet werden. Sie können beispielsweise für eine Zustandsüberwachung ("condition monitoring") und/oder Wartung ("predicitve maintenance") und/oder Steuerung ("advanced control"), jeweils des Apparats oder ganzen Anlage herangezogen werden.

## Patentansprüche

1. Verfahren zur Ermittlung einer verbleibenden Lebensdauer eines als Wärmetauscher oder als Kolonne oder als Behälter zur Phasentrennung ausgebildeten fluiddurchströmten verfahrenstechnischen Apparats (1),
wobei an dem Apparat (1) eine Recheneinheit (20) angebracht ist und wobei die Recheneinheit (20) datenübertragend an eine entfernte Recheneinheit (30) gekoppelt ist,
wobei Messwerte einer Temperatur mittels mehrerer in oder an dem Apparat (1) angeordneter Sensoren (10) gewonnen werden, aus den Messwerten der Temperatur eine mechanische Spannung als eine nicht direkt messbare Kenngröße ermittelt wird und aus der mechanischen Spannung die verbleibende Lebensdauer als eine weitere nicht direkt messbare Kenngröße ermittelt wird,
wobei die mechanische Spannung mittels der Recheneinheit (20) ermittelt wird, die mechanische Spannung und/oder die Messwerte der Temperatur an die entfernte Recheneinheit (30) übertragen werden und dort die verbleibende Lebensdauer ermittelt wird, oder
wobei die Messwerte der Temperatur an die entfernte Recheneinheit (30) übertragen werden und dort die mechanische Spannung und die verbleibende Lebensdauer ermittelt werden.

2. Verfahren nach Anspruch 1, wobei die Recheneinheit (20) ein Einplatinencomputer ist und/oder wobei die entfernte Recheneinheit (30) ein Server oder eine Cloud ist.

3. Verfahren nach Anspruch 1 oder 2, wobei zusätzlich zu den Messwerten der Temperatur Messwerte für wenigstens eine Größe ausgewählt aus einem Druck, einer Durchflussmenge, einer Durchflusszusammensetzung, einer Dehnung, einer Schwingung, einer Streuung oder Brechung oder Absorption elektromagnetischer Wellen mittels mehrerer in oder an dem Apparat (1) angeordneter Sensoren (10) gewonnen werden.

4. Verfahren nach einem der vorstehenden Ansprüche, wobei zusätzlich zu der verbleibenden Lebensdauer wenigstens noch eine weitere nicht direkt messbare Kenngröße mittels der an dem Apparat (1) angebrachten Recheneinheit (20) und/oder mittels der entfernten Recheneinheit (30) ermittelt wird, wobei die wenigstens noch eine weitere nicht direkt messbare Kenngröße ausgewählt ist aus einer Gruppe, die eine verbrauchte Lebensdauer, eine innere Verschmutzung (Fouling), eine Fehlverteilung eines Prozessflusses, eine örtliche Temperatur- und Konzentrationsverteilung, einen örtlichen Temperaturgradienten und einen Flüssigkeits- oder Gasanteil eines Prozessflusses umfasst.

5. Verfahren nach einem der vorstehenden Ansprüche, wobei wenigstens eine weitere nicht direkt messbare Kenngröße für eine Zustandsüberwachung und/oder vorausschauende Wartung und/oder Steuerung des fluiddurchströmten verfahrenstechnischen Apparats (1) verwendet wird.

6. Verfahren nach einem der vorstehenden Ansprüche, wobei wenigstens eine weitere nicht direkt messbare Kenngröße von der entfernten Recheneinheit (30) an die Recheneinheit (20) übertragen wird.

7. Verfahren nach einem der vorstehenden Ansprüche, wobei die mechanische Spannung als nicht direkt messbare Kenngröße mittels der Anwendung von physikalischen oder datengetriebenen Ersatzmodellen oder von durch Maschinenlernalgorithmen trainierten Ersatzmodellen bestimmt wird.

8. Verfahren nach einem der vorstehenden Ansprüche, wobei die mechanische Spannung als nicht direkt messbare Kenngröße zusätzlich aus wenigstens einem Messwert, der nicht mittels in oder an dem Apparat (1) angeordneter Sensoren (10) gewonnenen wird, ermittelt wird.

9. Verfahren nach einem der vorstehenden Ansprüche, wobei aus den Messwerten wenigstens ein virtueller Messwert einer Zielgröße bestimmt wird.

10. Verfahren nach einem der vorstehenden Ansprüche, wobei herrschende mechanische Spannungen in Form von Spannungsniveaus bzw. Spannungsverläufen aus den Messwerten der Temperatur bestimmt werden und daraus die verbleibende Lebensdauer ermittelt wird.

11. Verfahren nach Anspruch 10, wobei eine Anzahl von Spannungsveränderungen mit einer vorbestimmten Größe bestimmt wird.

12. Verfahren nach einem der vorstehenden Ansprüche, wobei der fluiddurchströmte verfahrenstechnischer Apparat (1) als ein Plattenwärmetauscher oder Spiral- oder gewickelter Wärmetauscher ausgebildet ist.

13. System (100) aus einer Anzahl in oder an einem als Wärmetauscher oder als Kolonne oder als Behälter zur Phasentrennung ausgebildeten fluiddurchströmten verfahrenstechnischen Apparat (1) angeordneter Sensoren (10), einer damit datenübertragend gekoppelten an dem Apparat (1) angebrachten Recheneinheit (20) und einer damit datenübertragend gekoppelten entfernten Recheneinheit (30), das Mittel aufweist, um ein Verfahren nach einem der vorstehenden Ansprüche durchzuführen.

14. Anordnung aus einem als Wärmetauscher oder als Kolonne oder als Behälter zur Phasentrennung ausgebildeten fluiddurchströmten verfahrenstechnischen Apparat (1) und einem System nach Anspruch 13.

## Claims

1. The method for determining a remaining service life of a fluid thrust-conducting process engineering apparatus (1), which apparatus is designed as a heat exchanger, or as a column, or as a container for phase separation,
wherein a computing unit (20) is attached to the apparatus (1), and wherein the computing unit (20) is linked, in terms of data transfer, to a remote computing unit (30),
wherein measured values of a temperature are obtained by means of a plurality of sensors (10) arranged in or on the apparatus (1), a mechanical stress is determined from the measured values of the temperature as a non-directly measurable quantity, and the remaining service life is determined from the mechanical stress as a further non-directly measurable quantity,
wherein the mechanical stress is determined by means of the computing unit (20), the mechanical stress and/or the measured values of the temperature are transmitted to the remote computing unit (30), and the remaining service life is determined there, or
wherein the measured values of the temperature are transmitted to the remote computing unit (30), and the mechanical stress and the remaining service life are determined there.

2. A method according to claim 1, wherein the computing unit (20) is a single board computer, and/or wherein the remote computing unit (30) is a server or a cloud.

3. A method according to claim 1 or 2, wherein, in addition to the measured values of the temperature, measured values of at least one quantity, selected from a pressure, a flow rate, a flow composition, an extension, an oscillation, a scattering, refraction or absorption of electromagnetic waves, are obtained by means of a plurality of sensors (10) arranged in or on the apparatus (1).

4. A method according to any one of the preceding claims, wherein, in addition to the remaining service life, at least one further non-directly measurable quantity is determined by means of the computing unit (20) attached to the apparatus (1), and/or by means of the remote computing unit (30), wherein the at least one further non-directly measurable quantity is selected from a group which includes an expired service life, internal contamination (fouling), an incorrect distribution of a process flow, a local temperature and concentration distribution, a local temperature gradient, and a liquid or gas fraction of a process flow.

5. The method according to any one of the preceding claims, wherein at least one further non-directly measurable quantity is used for state monitoring, and/or predictive maintenance, and/or control of the fluid thrust-conducting process engineering apparatus (1).

6. The method according to any one of the preceding claims, wherein at least one further non-directly measurable quantity is transmitted from the remote computing unit (30) to the computing unit (20).

7. The method according to any one of the preceding claims, wherein the mechanical stress is determined as a non-directly measurable quantity by means of the use of physical or data-driven analogous models, or analogous models trained by machine-learning algorithms.

8. A method according to any one of the preceding claims, wherein the mechanical stress, as a non-directly measurable quantity, is additionally determined from at least one measured value not obtained by means of sensors (10) arranged in or on the apparatus (1).

9. The method according to any one of the preceding claims, wherein at least one virtual measured value of a target variable is determined from the measured values.

10. The method according to any one of the preceding claims, wherein prevailing mechanical stresses in the form of stress levels or stress curves are determined from the measured values of the temperature, and the remaining service life is determined therefrom.

11. The method according to claim 10, wherein a number of stress changes with a predetermined magnitude is determined.

12. The method according to any one of the preceding claims, wherein the fluid thrust-conducting process engineering apparatus (1) is designed as a plate heat exchanger or spiral or wound heat exchanger.

13. A system (100) consisting of: a number of sensors (10) arranged in or on a fluid thrust-conducting process engineering apparatus (1) designed as a heat exchanger, or as a column, or as a container for phase separation; a computing unit (20) linked thereto in terms of data transfer and attached to the apparatus (1); and a remote computing unit (30) linked thereto in terms of data transfer, the system (100) having means to implement a method according to any one of the preceding claims.

14. An assembly consisting of a fluid thrust-conducting process engineering apparatus (1) designed as a heat exchanger, or as a column, or as a container for phase separation, and a system according to claim 13.

## Revendications

1. Procédé de détermination d'une durée de vie restante d'un appareil (1) d'ingénierie traversé par un fluide conçu comme un échangeur de chaleur ou une colonne ou un récipient destiné à la séparation de phases,
une unité de calcul (20) étant disposée sur l'appareil (1) et l'unité de calcul (20) étant couplée en transmission de données à une unité de calcul distante (30),
des valeurs de mesure d'une température pouvant être obtenues au moyen de plusieurs capteurs (10) disposés dans ou sur l'appareil (1), une contrainte mécanique étant déterminée en tant que grandeur caractéristique non directement mesurable à partir des valeurs de mesure de la température et la durée de vie restante étant déterminée comme une autre grandeur caractéristique non directement mesurable à partir de la contrainte mécanique,
la contrainte mécanique étant déterminée au moyen de l'unité de calcul (20), la contrainte mécanique et/ou les valeurs de mesure de la température étant transmises à l'unité de calcul distante (30) et là la durée de vie restante étant déterminée ou
les valeurs de mesure de la température étant transmises à l'unité de calcul distante (30) et là la contrainte mécanique et la durée de vie restante étant déterminées.

2. Procédé selon la revendication 1, dans lequel l'unité de calcul (20) est un ordinateur à carte unique et/ou dans lequel l'unité de calcul distante (30) est un serveur ou un nuage.

3. Procédé selon la revendication 1 ou 2, dans lequel, outre les valeurs de mesure de la température, des valeurs de mesure pour au moins une grandeur choisie parmi une pression, un débit, une composition de débit, un allongement, une oscillation, une dispersion ou réfraction ou absorption d'ondes électromagnétiques sont obtenues au moyen de plusieurs capteurs (10) disposés dans ou sur l'appareil (1).

4. Procédé selon l'une quelconque des revendications précédentes, dans lequel, en plus de la durée de vie restante, au moins une autre grandeur caractéristique non directement mesurable est déterminée au moyen de l'unité de calcul (20) disposée sur l'appareil (1) et/ou au moyen de l'unité de calcul distante (30), dans lequel l'au moins une autre grandeur caractéristique non directement mesurable est choisie dans le groupe comprenant une durée de vie utilisée, un encrassement interne (Fouling), une mauvaise distribution d'un flux de processus, une distribution de température et de concentration locale, un gradient de température local et une partie de liquide ou de gaz d'un flux de processus.

5. Procédé selon l'une quelconque des revendications précédentes, dans lequel au moins une autre grandeur caractéristique non directement mesurable est utilisée pour une surveillance d'état et/ou une maintenance prédictive et/ou une commande de l'appareil (1) d'ingénierie traversé par un fluide.

6. Procédé selon l'une quelconque des revendications précédentes, dans lequel au moins une autre grandeur caractéristique non directement mesurable est transmise de l'unité de calcul distante (30) à l'unité de calcul (20).

7. Procédé selon l'une quelconque des revendications précédentes, dans lequel la contrainte mécanique est déterminée en tant que grandeur caractéristique non directement mesurable au moyen de l'utilisation de modèles de remplacement physiques ou basés sur des données ou de modèles de remplacement entraînés par algorithmes d'apprentissage automatique.

8. Procédé selon l'une quelconque des revendications précédentes, dans lequel la contrainte mécanique est déterminée en tant que grandeur caractéristique non directement mesurable en plus à partir d'au moins une valeur de mesure, qui n'est pas obtenue au moyen de capteurs (10) disposés dans ou sur l'appareil (1).

9. Procédé selon l'une quelconque des revendications précédentes, dans lequel au moins une valeur de mesure virtuelle d'une grandeur cible est déterminée à partir des valeurs de mesure.

10. Procédé selon l'une quelconque des revendications précédentes, dans lequel des contraintes mécaniques existantes sont déterminées sous forme de niveaux de contrainte ou de courbes de contrainte à partir des valeurs de mesure de la température et la durée de vie restante est déterminée à partir de ces niveaux ou courbes de contrainte.

11. Procédé selon la revendication 10, dans lequel un nombre de variations de contrainte avec une grandeur prédéterminée est déterminé.

12. Procédé selon l'une quelconque des revendications précédentes, dans lequel l'appareil (1) d'ingénierie traversé par un fluide est conçu comme un échangeur de chaleur à plaques ou un échangeur de chaleur spiralé ou enroulé.

13. Système (100) composé d'un nombre de capteurs (10), disposés dans ou sur un appareil (1) d'ingénierie traversé par un fluide conçu comme un échangeur de chaleur ou une colonne ou un récipient destiné à la séparation de phases, une unité de calcul (20) disposée sur l'appareil (1) couplée en transmission de données avec ceux-ci et une unité de calcul distante (30) couplée en transmission de données avec ceux-ci, le système (100) présentant des moyens pour exécuter un procédé selon l'une quelconque des revendications précédentes.

14. Agencement composé d'un appareil (1) d'ingénierie traversé par un fluide conçu comme un échangeur de chaleur ou une colonne ou un récipient destiné à la séparation de phases et d'un système selon la revendication 13.
